# EUROPEAN PATENT SPECIFICATION

(11) **EP 2 327 064 B1**
(45) Date of publication and mention of the grant of the patent: **11.04.2018**
(21) Application number: 09789319.2
(22) Date of filing: 15.09.2009
(51) Int. Cl.: G08B 13/24

(54) **EAS POWER MANAGEMENT SYSTEM**
EAS-POWER-MANAGEMENT-SYSTEM
SYSTÈME DE GESTION DE LA CONSOMMATION D' ÉNERGIE POUR LA SURVEILLANCE ÉLECTRONIQUE D' ARTICLES (EAS)

(30) Priority: 18.09.2008 US 233062
(43) Date of publication of application: 01.06.2011
(73) Proprietor: Tyco Fire & Security GmbH, 8212 Neuhausen am Rheinfall (CH)
(72) Inventor: FALLIN, David Buchanan, Coral Springs FL 33071 (US); CLARK, John Jay, Boynton Beach FL 33437 (US); TRIBBEY, Scott, Alan, Coconut Creek FL 33073 (US)
(74) Representative: Kohl, Fabian Hanno
(86) International application number: PCT/US2009/005166
(87) International publication number: WO 2010/033191

(56) References cited:
- EP-A1- 1 482 465
- WO-A1-2005/073929
- WO-A2-2006/069042
- US-A- 6 084 512
- US-A- 6 111 502
- US-A1- 2007 018 813
- US-A1- 2007 273 307
- US-B1- 6 369 710

## Description

### FIELD OF THE INVENTION

The present invention relates generally to a method and system for power management and more specifically to a method and system for managing and controlling the power levels of devices in an electronic article surveillance security system.

### BACKGROUND OF THE INVENTION

Electronic Article Surveillance ("EAS") systems are detection systems that allow the detection of a marker or tag within a given detection region. EAS systems have many uses, but most often they are used as security systems to prevent shoplifting from stores or removal of property from office buildings. EAS systems come in many different forms and make use of a number of different technologies.

A typical EAS system includes an electronic detection EAS unit, markers and/or tags, and a detacher or deactivator. The detection unit includes transmitter and receiver antennas and is used to detect any active markers or tags brought within the range of the detection unit. The antenna portions of the detection units can, for example, be bolted to floors as pedestals, buried under floors, mounted on walls, or hung from ceilings. The detection units are usually placed in high traffic areas, such as entrances and exits of stores or office buildings. The deactivators transmit signals used to detect and/or deactivate the tags.

The markers and/or tags have special characteristics and are specifically designed to be affixed to or embedded in merchandise or other objects sought to be protected. When an active marker passes through the detection unit, the alarm is sounded, a light is activated, and/or some other suitable control devices are set into operation indicating the removal of the marker from the proscribed detection region covered by the detection unit.

Most EAS systems operate using the same general principles. The detection unit includes one or more transmitters and receivers. The transmitter sends a signal at defined frequencies across the detection region. For example, in a retail store, placing the transmitter and receiver on opposite sides of a checkout aisle or an exit usually forms the detection region. When a marker enters the region, it creates a disturbance to the signal being sent by the transmitter. For example, the marker may alter the signal sent by the transmitter by using a simple semiconductor junction, a tuned circuit composed of an inductor and capacitor, soft magnetic strips or wires, or vibrating resonators. The marker may also alter the signal by repeating the signal for a period of time after the transmitter terminates the signal transmission. This disturbance caused by the marker is subsequently detected by the receiver through the receipt of a signal having an expected frequency, the receipt of a signal at an expected time, or both. As an alternative to the basic design described above, the receiver and transmitter units, including their respective antennas, can be mounted in a single housing.

Power management/saving systems are common in the art. Typical power saving and management systems use traditional timers to shut down appliances, tools, and machines when not in use, and power these products back up again when their use is desired. During "down" times, in order to conserve energy, the powered machines are completely shut down. Further, typical power management systems group all powered tools or machines together on one schedule resulting in an impractical energy management system not to mention the inefficiencies of having to power up all machines if only some are to be in use at a given time.

Many power management systems base power conservation on separate timers. Strict interval-based timers have not worked well in power management systems because the timers tend to drift and are affected by actual and unforeseen power outages. This is not practical for EAS systems since this will result in the EAS equipment not being powered up when it should be. Further, most EAS equipment should not be "unplugged" or powered off completely, which is what occurs when they are connected to timers, since this can result in data loss and can make applications such as alarm management and other data-logging processes useless.

Other power management systems provide rigid, inflexible time schedules that schedule each device within a particular store or building. There is no centralized facility that receives power status information from each device in many locations and alters schedules accordingly. For example, while a weekday evening may be normally considered a slow time for retail shoppers, and therefore a feasible time to power down store equipment, other events (back to school rush, holiday, a large event at a mall that might bring people into the store) might alter the power mode schedules of the store devices. Further, feedback from store devices might give indications that certain regions within a retail store are not frequented at certain times and therefore many devices in those regions can enter a power save mode.

In addition, many other power management systems can only be altered by regional store managers, if at all. Other scheduling systems are canned software packages and cannot be altered at all. There is often a need for regional store managers, or local store managers to easily access their store's power mode schedules and alter them according to any of the reasons outlined above.

EP 1 482 465 A1 discloses an electronic article surveillance and people counting system. The power management of the electronic article surveillance system is based on people count data provided by the people counting system. If the people count data in a pre-determined time-interval exceeds a pre-determined people count threshold level the electronic article surveillance system is instructed to remain in a first higher power state. Otherwise it is instructed to enter a second lower power state.

US 6,111,502 shows a system for keeping watch over premises. The power management of the system is based on time schedules.

Therefore, what is needed is a flexible system and method for controlling, monitoring and managing the power usage of individual and/or groups of components in an electronic article surveillance system.

### SUMMARY OF THE INVENTION

The present invention advantageously provides a method and system for managing the power consumption of one or more devices in a given region. In one aspect of the invention, a system for managing power consumption of at least one electronic article surveillance (EAS) device according to appended claims 1-8 is provided.

In another aspect, a central device manager for managing power consumption of at least one EAS device according to appended claims 9-10 is provided.

In another aspect, a method for managing power consumption of at least one EAS device according to appended claims 11-15 is provided.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a block diagram of an exemplary power management system constructed in accordance with the principles of the present invention;
FIG. 2 is a flowchart illustrating the steps performed by the power management system of the present invention;
FIG. 3 is an illustration of an exemplary power management schedule in accordance with the principles of the present invention; and
FIG. 4 is an illustration of a device definition screen used by the Local Device Manager in accordance with the principles of the present invention.

### DETAILED DESCRIPTION OF THE INVENTION

Before describing in detail exemplary embodiments that are in accordance with the present invention, it is noted that the embodiments reside primarily in combinations of apparatus components and processing steps related to implementing a system and method for managing, monitoring and saving power in an electronic article surveillance interrogation system. Accordingly, the system and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

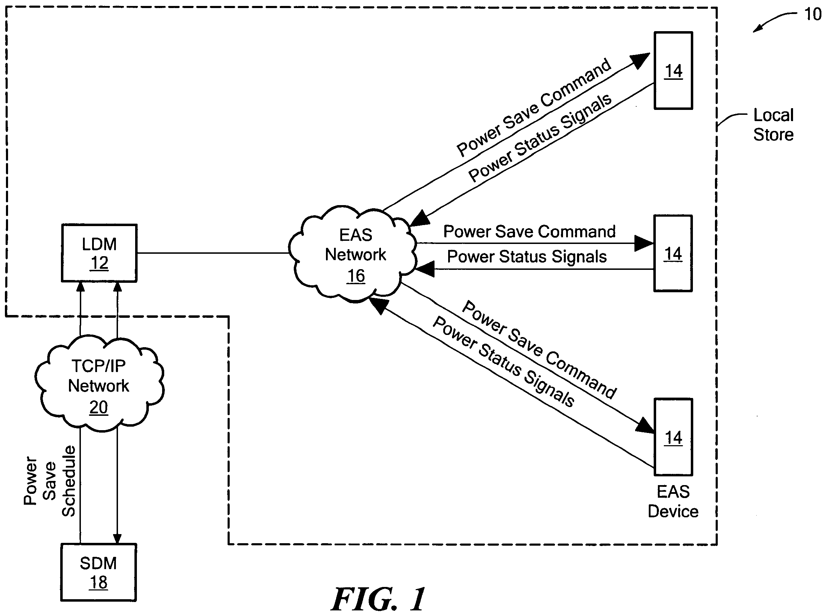

One embodiment of the present invention advantageously provides a method and system for managing the power consumption of components in an electronic article surveillance interrogation system. Referring now to the drawing figures in which like reference designators refer to like elements there is shown in FIG. 1 an apparatus constructed in accordance with the principles of the present invention and designated generally as "10". System 10 represents a power management system for an EAS interrogation system. Typical EAS systems includes an EAS reader unit used to transmit interrogation signals to one or more tags within a given interrogation region.

System 10 includes a Local Device Manager ("LDM") 12 in electronic communication with EAS components 14 over a communication such as a local EAS communication network 16. LDM 12 is also in electronic communication with a Smart Device Manager ("SDM") 18 over communication network 20. In one embodiment, network 20 is a Transmission Control Protocol/Internet Protocol ("TCP/IP") network, i.e. the Internet. Local Device Manager 12 includes the necessary hardware, software, processors, data storage, memory and user interface modules necessary to communicate with SDM 18 over network 20 and devices 14 over EAS network 16, and store and modify power save schedules for a particular region, i.e. a local retail store having an EAS interrogation system. Similarly, SDM 18 contains data storage and memory modules, along with the hardware and software necessary to create, save, modify, store and transmit to one or more LDMs 12 power save schedules. SDM 18 can communicate with many LDMs 12 over a wide geographic area, thus providing a central location for monitoring and managing the power consumption schedules for a large number of local stores, via its communication with each store's LDM 12.

EAS devices 14 can include any type of equipment used in an EAS interrogation system. For example, an EAS device could be an EAS tag that is affixed to items that are located within an EAS interrogation system interrogation area. In one embodiment, LDM 12, EAS network 16 and EAS devices 14 are all located within one facility, such as for example a retail store. However, LDM 12 need not be physically located within the store or area that it monitors. Regardless of its physical location, LDM 12 provides a localized intelligence in the customer's store and is connected via a dedicated network 16 to all EAS equipment 14 in the store. One purpose of LDM 12 is to collect data from the EAS devices 14 as well as to provide for control and remote service and diagnostics. LDM 12 can thus control the functional state of the EAS equipment 14 based upon internal and external triggers such as, for example, time of day, Point-Of-Sale ("POS") transactions, people counting units /proximity units, etc.

LDM 12 can define and accumulate an EAS operational profile for each EAS device 14 that it is in communication with such that LDM 12 can place each individual EAS device 14, or a group of devices 14 into a low power mode and then "awaken" them when it is appropriate to do so. This approach provides a method for scheduling such that different types of EAS equipment 14 can be given different schedules. For example, EAS detectors can be placed on a different power save schedule than EAS deactivators. These store-level schedule profiles can be defined and stored at the store level or at a corporate level, for example, by an SDM server application. SDM 18 can then be used to manage these profiles across many different stores in many different geographical areas. Advantageously, this allows the user interface to be flexible but provides some control over the system by either the customer or a third party service organization. The profiles can be modified either at an upper level (i.e. by SDM 18) or within the store itself (i.e. via each store's LDM 12).

SDM 18 can include a scheduling module for creating at least one power save schedule. SDM 18 can also include a schedule communication module for communicating with LDM 12 and for sending the power save schedules to LDM 12. The schedule communication module receive power mode status signals from LDM 12, and the scheduling module can then alter the power save schedules based on the received power mode signals.

Thus, as depicted in FIG. 1, LDM 12 connects to the EAS devices 14 via dedicated EAS network 16. The LDM 12 connects to the SDM 18 via a TCP/IP network, such as the Internet. SDM 18 distributes Power Save Schedules to LDM 12 in each store that it is in communication with. LDM 12 then sends Power Save Commands, i.e., a "Power Save On" command, or a "Power Save Off' command to each EAS device 14 as dictated by the Power Save Schedule.

The EAS Power Management system 10 of the present invention can be implemented in LDM 12. System 10 is used to minimize the power utilization of equipment, such as, for example, EAS devices 14 in locations such as in retail stores that implement item interrogation systems. LDM 12 controls the power usage of the EAS equipment 14 that is connected LDM 12 using one or more of a number of different management schemes. In addition, system 10 allows a customer, via access to a web site, to have a level of control over how power management system 10 is implemented in their store or region.

The EAS Power Management system 10 of the present invention may be implemented in several ways. In one embodiment, a time schedule is established that indicates a specific time interval when a particular EAS device 14 will be in a low power mode. This can be an actual time of day (absolute) or an offset (relative) time and can be managed for each individual device 14 and type. A master schedule could be invoked for all EAS devices 14 that includes an exception list for each device or type of device. For example, at the proper time, LDM 12 sends an appropriate message to an EAS device 14 to either "put it to sleep" or to "wake it up". The schedule could be setup and/or modified either via LDM 12, which may be at the same location as EAS devices 14, i.e., a retail store, or via a remotely-located LDM 12 or SDM 18.

In one embodiment, EAS devices 14 can advantageously be grouped into "zones", i.e., by any given criteria thus allowing for the scheduling of groups of EAS devices 14 rather than having to provide power schedules and power mode commands for each device 14. For example, groupings or "zones" could be according to a specific product type or by physical location in the interrogation region and each zone scheduled accordingly. Special scheduling factors such as holiday hours, special sales, and differing time zone can also be taken into account.

In another embodiment, system 10 can implement a power management schedule based on factors other than time. For example, EAS power management system 10 can provide a power save schedule instructing certain EAS devices 14 or zones to "go to sleep" after a fixed period of inactivity and would then instruct the devices to "wake up" when that device needs to be used. LDM 12 can receive signals from the EAS devices 14 which indicate when those devices are in use, and, in one embodiment, create a "user profile" for that device and modify that device's future power save schedule. For example, a deactivation device could provide a signal to LDM 12 when the device is in use at a scanner or at a POS terminal during a product transaction. This signal would initiate a trigger mechanism in LDM 12, prompting LDM 12 to "wake up" the deactivator if it had previously been powered down, taking it out of its low power or "sleep" mode. This interaction between LDM 12 and the deactivator can be recorded and stored either in LDM 12 or at SDM 18.

Another example of a trigger device that is used to initiate a power mode implementation in a device is the use of a sensor that detects when a person approaches. Thus, a device 14 that may normally be in low power mode may be "awakened" when a person approaches the device 14. Similarly, device 14 could be placed in its low power state by the absence of a person in range of the sensor for a predetermined time period of inactivity. Thus, data obtained from a "people-counting" system that is integrated in the EAS system can be used to trigger the activation or deactivation of EAS device 14. Such a system could use an overhead or antenna-mounted sensor that can detect the presence of a person moving in proximity of, for example, the doorway where the detectors are located. This data can be transmitted back to LDM 12 and used to initiate a low power state or to resume normal state for the detector.

In addition to providing commands to devices that would enable them to power up, system 10 could also provide a trigger mechanism to enable EAS devices 14 to "go to sleep". This could be advantageous during hours when the store is closed in order to avoid the triggering of false alarms. During closed hours when noise inside the store has died down, the EAS sensors can be put on low power. In this fashion, if a rack of clothing inadvertently falls, the stores alarm system wouldn't be sounded if the motion sensors were in sleep mode. This may be implemented, for example, by designating a fixed period of time from the last event recorded from a people-counting device. A signal from the people-counting device to LDM 12 would then enable LDM 12 to shift a particular device, i.e. one or more sensors, from an active mode to "low power" or "sleep" mode. LDM 12 could keep track of each device's power usage and "learn" their patterns in order to establish a schedule for each device 14 or each zone. This ultimately results in minimum power usage for a particular EAS interrogation zone assuming that there are no "false wake up triggers".

It should be noted that LDM 12 can initialize a "full power" mode or a lesser power or "sleep" mode. In one embodiment, "sleep mode" is still an operational mode but it is a mode that enables the device to operate on a lower power level.

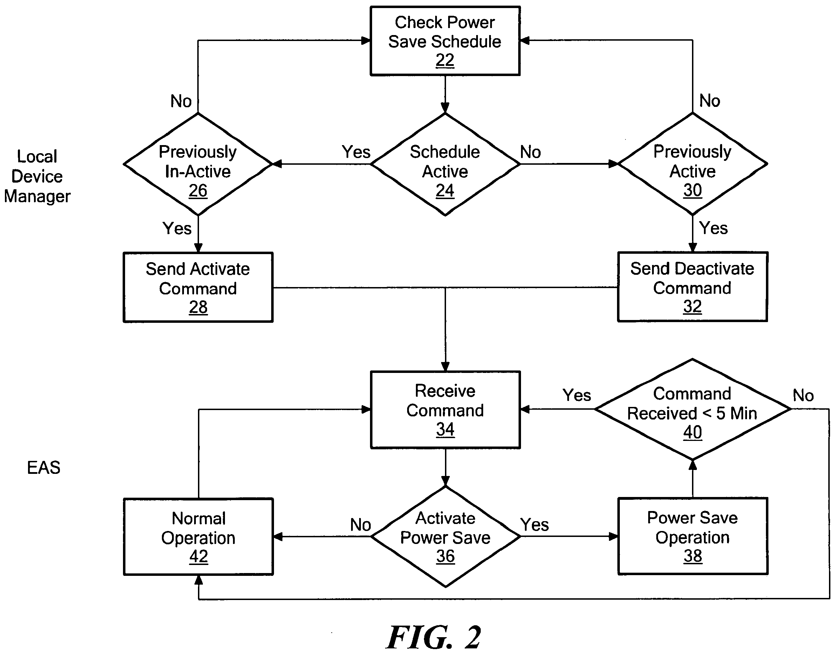

FIG. 2 is a flowchart illustrating the exemplary steps taken by system 10 of the present invention to transmit power save commands between the LDM 12 and one or more EAS devices 14. Once LDM 12 has received power save schedules from SDM 18 it performs a series of steps that allows it to communicate with each EAS device 14, or groups of devices 14 and assures that each device 14 complies with the schedule. For simplicity, "EAS device" or "target EAS device" is defined herein to mean either one EAS device or a group of EAS devices grouped according to one or more predetermined criteria.

Via step 22, LDM 12 refers to the power save schedule that it received from SDM 18. It then determines, via step 24, if a particular EAS device's power save mode should be active. If the power save mode for the target EAS device 14 should be active (according to the power save schedule received from SDM 18) and it is determined via step 26 that the power save mode for the target EAS device 14 was previously inactive, LDM 12 sends an activate command, via step 28, to the target EAS device. If the power save mode for the target EAS device 14 was already active, there is no need to send a command to the EAS device 14, and LDM 12 checks the power save schedule for the next EAS device 14, via step 22. If it is determined, via step 24, that the power save mode for the target EAS device 14 is not active, but was previously active, as determined by step 30, then LDM 12 sends, via step 32, a deactivate command to the target EAS device 14. If the target EAS device 14 was previously inactive then there is no need to send a deactivation signal and LDM 12 checks the power save schedule for the next EAS device 14.

Referring to FIG. 2 from the perspective of a target EAS device 14, the EAS device 14 receives, via step 34, a command from LDM 12. As discussed above, this command could be a command to active the power save mode of the target EAS device 14 or to de-activate it. Thus, if the command is to activate the power save mode for the target device 14, as determined by step 36, a power save operation is invoked, via step 38.

In one embodiment, system 10 includes a "fail safe" feature, which accounts for unforeseen communication loss between LDM 12 and its target EAS device. In this scenario, EAS device 14 determines, via step 40, if another command is received from the LDM 12 within a predetermined period of time, e.g. five minutes. If a command is received within the preset time limit, then the process proceeds as described above beginning with step 34. If no command is received within the predetermined time period then it is assumed that there was a communication loss between LDM 12 and the EAS device 14. In this embodiment, the target EAS device 14 reverts back to its normal operation, via step 42. "Normal" operation could be its fully powered up operation, i.e., its operation without the implementation of power mode constraints due to the power save schedule. The operation of reverting back to normal (non-power save mode) operation is one embodiment of the present invention. In other embodiments, it is also contemplated that the target EAS device 14 remains in power save mode until another command is received from LDM 12. Via step 36, if the command received is to deactivate the target EAS device 14, then the device returns to normal operation via step 42. i.e., with power save mode deactivated.

The present invention allows EAS devices to be toggled from "normal" mode to a "power save" mode. "Power save mode" means that a particular EAS device, or group of devices, will follow the power constraints and power down as dictated in the power save schedule. The amount of power saved in "power save" mode can vary from device to device. For example, when in power save mode an EAS sensor can deactivate its transmitter, reducing its power by, for example, 75%. Deactivation devices can disable their deactivation and detection transmitter, reducing power their power by, for example, 50%. Thus, the present invention is not limited by the amount of power saved when a device is in power save mode, nor is it limited by what a device does to reduce its power consumption.

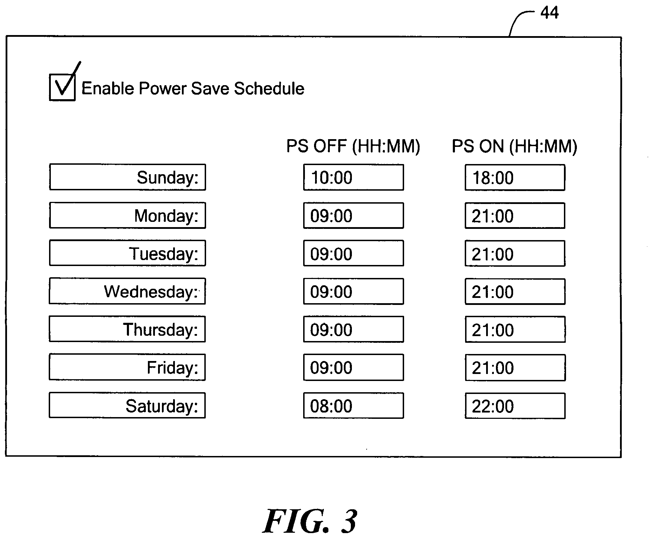

FIG. 3 represents an exemplary screen used by an operator at either the LDM 12 location or the SDM 18 location to set and/or revise power save schedules for EAS devices 14 utilizing system 10. In this scenario, which may be used, for example, at a retail store in a shopping mall, a single schedule 44 is used to power up and power down all of the identified EAS devices 14 in a particular EAS interrogation region within the store. In this example, every EAS device 14 is given instructions to power up (Power Save feature is disabled) at 10 AM Sunday morning, and to power back down (Power Save feature is enabled) at 6 PM Sunday evening, to account for a retail store closing early on Sundays. On Monday through Thursday, a schedule for a regular work day requires that each EAS device 14 power up (power save mode disabled) at 9 AM and power down (power save mode enabled) at 9 PM. On Saturday, the power save mode is disabled when the store opens at 8 AM and is enabled when the store closes for the day at 10 PM. The schedule can account for time zones and daylight savings time and can be altered to account for holidays (some are heavy shopping days and others the store may be closed), seasons (back-to-school sales with increased shopping hours), and/or special events (a famous athlete to appear at a mall where the store is located). As discussed above, this schedule is sent by SDM 18 to one or more LDMs 12, where each LDM 12 implements a power save schedule for the EAS devices 14 it controls.

In an alternate embodiment, different schedules can be set for different types of EAS devices. For example, one power save schedule can be created for deactivators and another schedule created for sensors. Or, as discussed above, EAS devices 14 can be grouped together into "zones" depending upon their relative location within the EAS interrogation area. Certain devices 14 may not appear on the schedule and therefore will not receive power save commands from LDM 12.

As discussed above, LDM 12 contains a processor, memory, and data storage capability that enables it to receive power save schedules from SDM 18, to alter and save the power save schedules and to transmit power activation and deactivation commands over EAS network 16 to target EAS devices 14, as shown in FIG. 2. LDM 12 can also receive poll responses from each EAS device 14. These poll responses may include the status of the EAS device's transmitter as well as other "trigger event" information that would enable LDM 12 to implement the power save schedules.

A software application within LDM 12 manages the communications between LDM 12 and the EAS devices 14. The settings for the power save schedule can be kept in a file within LDM 12 along with the other system settings. In one embodiment, the schedule includes seven groups of settings, one for each day of the week. For example, there will be a power save enabled, start time and power save stop time for each day. In one embodiment, Day 0 will be designated as Sunday and Day 6 will be designated as Saturday. Thus, code entries could be as follows:

**[POWER SAVE]**

| | |
|---|---|
| Day0Enable=1 | ; Power save enabled for this day |
| Day0Start=19:00 | ; Power save start time (24 hr) |
| Day0Stop=09:00 | ; Power save stop time (24 hr) |
| ● | |
| ● | |
| ● | |
| Day6Enable=1 | |
| Day6Start=19:00 | |
| Day6Stop=10:00 | |

Additional settings can be added to the device settings pertaining to enabling/disabling power save mode for that device. Each EAS device 14 can be individually enabled for power save mode. The additional entries for each device is shown below:

**[DEVICE1]**

| | |
|---|---|
| PowerSave=1 | ; Device will follow power save schedule |

Additional entries for the device definition can be as follows:

**[DEVICE_DEF2]**

| | |
|---|---|
| PowerSave=1 | ; Device supports power save |
| PowerSaveOnCmd=01,00,00,70,01,00 | ; Cmd to enable power save |
| PowerSaveOffCmd=01,00,00,70,00, 00 | ; Cmd to disable power save |
| StatusBytes=1 | ; Device supports status bytes |

Upon receipt of a power save activate or de-activate command, each EAS device 14 is instructed to turn its transmitter off and on, respectively. The command itself is a data stream containing data portions that correspond to different features of the data transaction. A typical command sent for each EAS device 14 is as follows:

| Destination Address | Source Address | Data Length | Command 0x70 | Data 0 or 1 | Checksum |
|---|---|---|---|---|---|
| 1 byte | 1 byte | 1 byte | 1 byte | 1 byte | 1 byte |

Here, the data portion of the command contains a "1" to enable power save mode or a 0 to disable power save mode. Each EAS device 14 then responds to the power save command. Its responsive data stream could be as defined below:

| Destination Address | Source Address | Data Length | Command 0x70 | Device ID | Data 0 or 1 | Checksum |
|---|---|---|---|---|---|---|
| 1 byte | 1 byte | 1 byte | 1 byte | 1 byte | 1 byte | 1 byte |

In another embodiment, the EAS device response to the LDM command includes two bytes to be used for the EAS device status. In one embodiment, the first use of the status bytes indicates the power save state of the EAS device 14. The least significant bit of the status bytes will be set to indicate the current state of the power save mode of the EAS device 14. For example:

**Poll Response:**

| Destination Address | Source Address | Data Length | CMD | Device Type | Data | | Checksu |
|---|---|---|---|---|---|---|---|
| | | | | | Counts | Status | m |
| 1 byte | 1 byte | 1 byte | 1 byte | 1 byte | 1 - 8 bytes | 2 bytes | 1 byte |

The power save schedules can be compiled and or modified by an operator controlling the LDM 12, SDM 18 or via a third party via the Internet. For example, in one embodiment, configurable power save schedules can be made available to a third party user of system 10 or the owner of the retail store via a secure website that posts the individual power save schedules for the EAS devices. Each schedule can be configurable for each device 14 or group of devices.

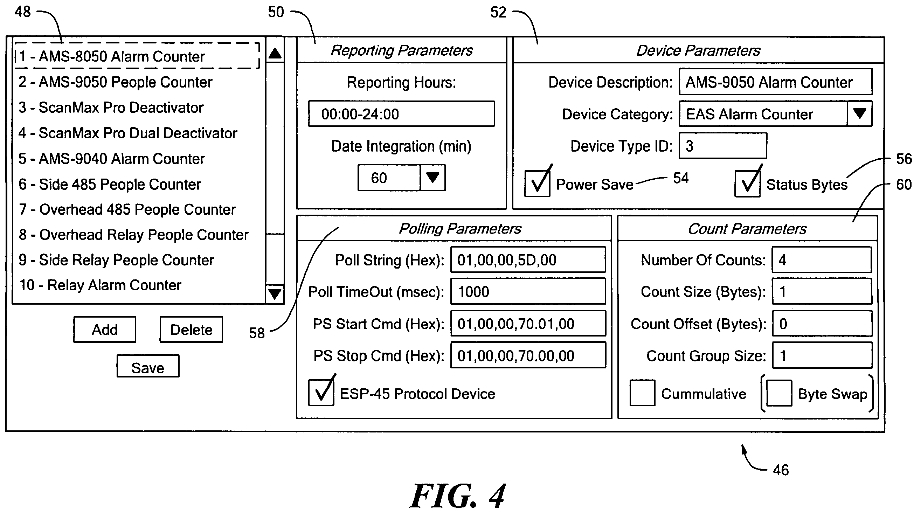

FIG. 4 illustrates an exemplary device definition display screen 46 used to configure the primary operation of LDM 12, which includes communication and data collection from the EAS devices 14. The exemplary screen presented in FIG. 4 may be used to define the communication parameters for a specific type of device 14. This screen may be accessed by an operator at LDM 12 or SDM 18 or by a third party via a secure web browser over the Internet. Advantageously, LDM 12 supports the addition of new devices that are to be scheduled by creating a communication protocol definition for each new device 14. This provides a more manageable method than having to modify the executable code every time a new device 14 is created or an existing device is modified.

Device window 48 is used to select or create a name for a specific device type that LDM 12 needs to communicate with. Device names can be added, deleted, or edit via this window. Reporting Parameters window 50 is used to define the reporting time interval (e.g., 24 hour or 1 day) and the Data Integration period which is the next smallest time interval for accumulating data or "counts". The Device Parameters window 52 is used to specify details about the device 14 and define a category and reference type to be used for collecting data. The Power Save checkbox 54 is used to specify whether or not the selected device 14 supports the EAS power save functions as provided by system 10. The Status Bytes checkbox 56 specifies if the selected device 14 will return status bytes to LDM 12 in its poll response.

The Polling Parameters window 58 is used to define the specific message and protocol or format used to communicate to the selected device 14. When the LDM 12 "polls" or sends a request message to device 14, it will use the command and message data specified in this window. Further, the timeout value is defined so that if a response from the intended device is not received, LDM 12 can keep trying. The PS Start and Stop Command fields define the specific messages that are sent to put the device in low power state (Start) or to return it to normal operation (Stop). The checkbox is used to indicate if the device uses a communication protocol that conforms to certain internal documented standards.

The Count Parameters window 60 is used to define the specifics of how the selected device will report counts, if applicable. An EAS system or people-counter device may have multiple antennas and be capable of reporting alarm counts for different zones so these fields define how many, how large, and how the counts are organized (groups). The checkboxes are used to specify if the device accumulates counts or if LDM 12 is required to do this and if each count (if there are multiple bytes) will be sent a high byte or a low byte first.

Utilizing both local intelligence (LDM 12) and global control (SDM 18) to manage the power utilization of EAS equipment, the present invention provides a flexible and configurable tool to allow users the freedom to implement power usage schedules for different EAS devices in an EAS interrogation system in order to realize an aggregate savings in power consumption. System 10 of the present invention uses a combination of time interval, proximity, and transaction demands to trigger EAS devices 14 to low power and normal states. By receiving status information from EAS devices 14, local power usage profiles can be created and monitored and stored either locally within LDM 12 or remotely at SDM 18, or at both locations. System 10 can adapt to different types of EAS equipment and can supply different and unique schedules based not only on EAS device type but also on the device's location in the store. By automatically adjusting schedules for variables such as seasonal store hours, time zones, holidays, and special events, system 10 provides a flexible tool to allow the EAS equipment to be placed in low power mode when not in use but will still allow for data collection, diagnostics, and control.

The system of the present invention is flexible in that it can be customized to control the power levels of all devices in a given region, and information can be collected from various regions, stored and "profiles" created to assist customers develop customized power usage schedules. Each piece of equipment can receive a power save schedule, or groups of equipment can be created and scheduled according to one of several different grouping criteria.

The present invention can be realized in hardware, software, or a combination of hardware and software. Any kind of computing system, or other apparatus adapted for carrying out the methods described herein, is suited to perform the functions described herein.

A typical combination of hardware and software could be a specialized or general purpose computer system having one or more processing elements and a computer program stored on a storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or non-volatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

In addition, unless mention was made above to the contrary, it should be noted that all of the accompanying drawings are not to scale. Significantly, this invention can be embodied in other specific forms without departing from the scope of the invention as defined by the appended claims.

## Claims

1. A system for managing power consumption of at least one electronic article surveillance (EAS) device (14), the system comprising:
a first device manager (18) for transmitting at least one power save schedule, the at least one power save schedule defining power save mode activation and deactivation times for the at least one EAS device (14); and
a second device manager (12) for receiving the at least one power save schedule, the second device manager also in communication with the at least one EAS device (14), the second device manager configured to:
transmit power save mode activate or de-activate commands to the at least one EAS device (14) based on the at least one power save schedule to the at least one EAS device (14);and
receive power save mode status signals from the at least one EAS device (14), said power save mode status signals indicating the power save mode state of the at least one EAS device (14); wherein
power save mode activation and deactivation of the at least one EAS device (14) takes place upon occurrence of a trigger event, information about the state of the at least one EAS device (14) as well as information about said trigger event (12) being transmitted to the second device manager (12); wherein
the first or second device manager (12,18) is adapted to alter the at least one power save schedule based upon said power save mode status signals and said transmitted trigger event information.

2. The System of Claim 1, wherein the at least one EAS device (14) is grouped and scheduled according to a location within a corresponding electronic article surveillance interrogation area.

3. The system of claim 1, wherein the at least one EAS device (14) is grouped and scheduled according to a similarity in function with other devices.

4. The system of claim 1, wherein the second device manager is located within an electronic article surveillance interrogation area.

5. The system of claim 1, wherein the trigger event is a specific time on a specific day of the week.

6. The system of claim 1, wherein the at least one EAS device (14) is a product deactivation device and the trigger event is a point-of-sale transaction involving the deactivation device or the at least one EAS device (14) is a people detection device and the trigger event is based upon a number of people passing within a predetermined proximity of the people detection device.

7. The system of claim 1, wherein the second device manager transmits the received power save mode status signals from the at least one EAS device (14) to the first device manager, and wherein the first device manager alters at least one power save schedule based on the received power save mode status signals.

8. The system of claim 1, wherein the second device manager creates a profile for the at least one EAS device (14) and alters the at least one power schedule based on the profile for the at least one EAS device (14).

9. A central device manager for managing power consumption of at least one EAS device (14), the central device manager (18) comprising:
a scheduling module for creating at least one power save schedule, the at least one power save schedule defining power save mode activation and deactivation times for the at least one EAS device (14); and
a schedule communication module for sending the at least one power save schedule to a local device manager (12), the schedule communication module receiving from the local device manager (12) power save mode status signals indicating the status of the power save mode of the at least one EAS device (1 and information about at least one trigger event that has triggered power save mode activation and deactivation of the at least one EAS device (14),
the scheduling module altering the at least one power save schedule based on the received power save mode status signals and the received information about the at least one trigger event.

10. The central device manager of claim 9, wherein the central device manager is adapted to receive from the local device manager (12) a profile for the at least one EAS device (14) and to store and manage said received profile.

11. A method for managing power consumption of at least one EAS device (14), the method comprising:
creating at a first device manager (18) and transmitting to a second device manager (12) at least one power save schedule, the at least one power save schedule defining power save mode activation and deactivation times for the at least one EAS device (14);
transmitting by the second device manager (12) power save mode activate or de-activate commands to the at least one EAS device (14), the power save mode activate or de-activate commands based upon the at least one power save schedule and instructing the at least one EAS device (14) to either activate or deactivate the power save mode;
receiving by the second device manager (12) power save mode status information from the at least one EAS device (14), the power save mode status information indicating the power save mode state of the at least one EAS device (14);
wherein power save mode activation or de-activation of the at least one EAS device (14) takes place based upon the occurrence of at least one trigger event;
receiving by the second device manager (12) information about said at least one trigger event; updating at the first or second device manager (12, 18) the at least one power save schedule based upon the received power save mode status information and information about said at least one trigger event.

12. The method of claim 11, wherein the trigger event is a specific time on a specific day of the week.

13. The method of claim 11, wherein the at least one EAS device (14) is a product deactivation device and the trigger event is a point-of-sale transaction involving the deactivation device or the at least one EAS device (14) is a people detection device and the trigger event is based upon a number of people passing within a predetermined proximity of the detection device.

14. The method of claim 11, further comprising grouping and scheduling the at least one EAS device (14) according to a location within a corresponding electronic article surveillance interrogation area.

15. The method of claim 11, further comprising grouping and scheduling the at least one EAS device (14) according to a similarity in function with other devices.

## Patentansprüche

1. System zum Verwalten eines Energieverbrauchs von mindestens einer elektronischen Artikelsicherungs(EAS)-Vorrichtung (14), wobei das System umfasst:
einen ersten Vorrichtungsverwalter (18) zum Senden mindestens eines Energiesparplans, wobei der mindestens eine Energiesparplan Energiesparmodus-Aktivierungs- und
Deaktivierungszeiten für die mindestens eine EAS-Vorrichtung (14) definiert; und
einen zweiten Vorrichtungsverwalter (12) zum Empfangen des mindestens einen Energiesparplans, wobei der zweite Vorrichtungsverwalter ferner in Verbindung mit der mindestens einen EAS-Vorrichtung (14) steht, und der zweite Vorrichtungsverwalter konfiguriert ist, um:
Energiesparmodus-Aktivierungs- oder Deaktivierungsbefehle an die mindestens eine EAS-Vorrichtung (14) basierend auf dem mindestens einen Energiesparplan an die mindestens eine EAS-Vorrichtung (14) zu senden; und
Energiesparmodus-Statussignale von der mindestens einen EAS-Vorrichtung (14) zu empfangen, wobei die Energiesparmodus-Statussignale den Energiesparmoduszustand der mindestens einen EAS-Vorrichtung (14) anzeigen; wobei die Energiesparmodus-Aktivierung und -Deaktivierung der mindestens einen EAS-Vorrichtung (14) bei Auftreten eines Trigger-Ereignisses stattfindet, wobei eine Information über den Zustand der mindestens einen EAS-Vorrichtung (14) sowie eine Information über das Trigger-Ereignis (12) an den zweiten Vorrichtungsverwalter (12) gesendet werden;
wobei
der erste oder zweite Vorrichtungsverwalter (12, 18) dazu eingerichtet ist, den mindestens einen Energiesparplan basierend auf den Energiesparmodus-Statussignalen und der gesendeten Trigger-Ereignisinformation zu verändern.

2. System nach Anspruch 1, wobei die mindestens eine EAS-Vorrichtung (14) gemäß einem Standort innerhalb eines entsprechenden elektronischen Artikelüberwachungs-Abfragebereichs gruppiert und eingeplant wird.

3. System nach Anspruch 1, wobei die mindestens eine EAS-Vorrichtung (14) gemäß einer Ähnlichkeit der Funktion mit anderen Vorrichtungen gruppiert und eingeplant wird.

4. System nach Anspruch 1, wobei sich der zweite Vorrichtungsverwalter innerhalb eines elektronischen Artikelüberwachungs-Abfragebereichs befindet.

5. System nach Anspruch 1, wobei das Trigger-Ereignis eine spezifische Zeit an einem spezifischen Tag der Woche ist.

6. System nach Anspruch 1, wobei die mindestens eine EAS-Vorrichtung (14) eine Produkt-Deaktivierungsvorrichtung ist und das Trigger-Ereignis eine die Deaktivierungsvorrichtung involvierende Verkaufsort-Abwicklung ist, oder die mindestens eine EAS-Vorrichtung (14) eine Personenerkennungsvorrichtung ist und das Trigger-Ereignis auf einer Anzahl von innerhalb einer vorbestimmten Nähe an der Personenerkennungsvorrichtung vorbeigehenden Personen basiert.

7. System nach Anspruch 1, wobei der zweite Vorrichtungsverwalter die empfangenen Energiesparmodus-Statussignale von der mindestens einen EAS-Vorrichtung (14) an den ersten Vorrichtungsverwalter sendet, und wobei der erste Vorrichtungsverwalter mindestens einen Energiesparplan basierend auf den empfangenen Energiesparmodus-Statussignalen verändert.

8. System nach Anspruch 1, wobei der zweite Vorrichtungsverwalter ein Profil für die mindestens eine EAS-Vorrichtung (14) erstellt und den mindestens einen Energieplan basierend auf dem Profil für die mindestens eine EAS-Vorrichtung (14) verändert.

9. Zentraler Vorrichtungsverwalter zum Verwalten eines Energieverbrauchs von mindestens einer EAS-Vorrichtung (14), wobei der zentrale Vorrichtungsverwalter (18) umfasst:
ein Planungsmodul zum Erstellen von mindestens einem Energiesparplan, wobei der mindestens eine Energiesparplan Energiesparmodus-Aktivierungs- und Deaktivierungszeiten für die mindestens eine EAS-Vorrichtung (14) definiert; und
ein Planungs-Kommunikationsmodul zum Senden des mindestens einen Energiesparplans an einen lokalen Vorrichtungsverwalter (12), wobei das Planungs-Kommunikationsmodul von dem lokalen Vorrichtungsverwalter (12) Energiesparmodus-Statussignale empfängt, die den Status des Energiesparmodus der mindestens einen EAS-Vorrichtung (14) und eine Information über mindestens ein Trigger-Ereignis, das eine Energiesparmodus-Aktivierung und Deaktivierung der mindestens einen EAS-Vorrichtung (14) getriggert hat, anzeigen,
wobei das Planungsmodul den mindestens einen Energiesparplan basierend auf den empfangenen Energiesparmodus-Statussignalen und der empfangenen Information über das mindestens eine Trigger-Ereignis verändert.

10. Zentraler Vorrichtungsverwalter nach Anspruch 9, wobei der zentrale Vorrichtungsverwalter dazu eingerichtet ist, von dem lokalen Vorrichtungsverwalter (12) ein Profil für die mindestens eine EAS-Vorrichtung (14) zu empfangen und das empfangene Profil zu speichern und zu verwalten.

11. Verfahren zum Verwalten eines Energieverbrauchs von mindestens einer EAS-Vorrichtung (14), wobei das Verfahren umfasst:
Erstellen, bei einem ersten Vorrichtungsverwalter (18), und Senden an einen zweiten Vorrichtungsverwalter (12), von mindestens einem Energiesparplan, wobei der mindestens eine Energiesparplan Energiesparmodus-Aktivierungs- und Deaktivierungszeiten für die mindestens eine EAS-Vorrichtung (14) definiert;
Senden, durch den zweiten Vorrichtungsverwalter (12), von Energiesparmodus-Aktivierungs- oder Deaktivierungsbefehlen an die mindestens eine EAS-Vorrichtung (14), wobei die Energiesparmodus-Aktivierungs- oder Deaktivierungsbefehle auf dem mindestens einen Energiesparplan basieren und der mindestens einen EAS-Vorrichtung (14) anweisen, den Energiesparmodus entweder zu aktivieren oder zu deaktivieren; Empfangen, durch den zweiten Vorrichtungsverwalter (12), einer Energiesparmodus-Zustandsinformation, von der mindestens einen EAS-Vorrichtung (14), wobei die Energiesparmodus-Zustandsinformation den Energiesparmoduszustand der mindestens einen EAS-Vorrichtung (14) anzeigt;
wobei die Energiesparmodus-Aktivierung oder Deaktivierung der mindestens einen EAS-Vorrichtung (14) basierend auf dem Auftreten von mindestens einem Trigger-Ereignis stattfindet; Empfangen, durch den zweiten Vorrichtungsverwalter (12), einer Information über das mindestens eine Trigger-Ereignis; Aktualisieren, bei dem ersten oder zweiten Vorrichtungsverwalter (12, 18), des mindestens einen Energiesparplans basierend auf der empfangenen Energiesparmodus-Zustandsinformation und der Information über das mindestens eine Trigger-Ereignis.

12. Verfahren nach Anspruch 11, wobei das Trigger-Ereignis eine spezifische Zeit an einem spezifischen Tag der Woche ist.

13. Verfahren nach Anspruch 11, wobei die mindestens eine EAS-Vorrichtung (14) eine Produkt-Deaktivierungsvorrichtung ist und das Trigger-Ereignis eine die Deaktivierungsvorrichtung involvierende Verkaufsort-Abwicklung ist, oder die mindestens eine EAS-Vorrichtung (14) eine Personenerkennungsvorrichtung ist und das Trigger-Ereignis auf einer Anzahl von innerhalb einer vorbestimmten Nähe an der Erkennungsvorrichtung vorbeigehenden Personen basiert.

14. Verfahren nach Anspruch 11, ferner umfassend das Gruppieren und Einplanen der mindestens einen EAS-Vorrichtung (14) gemäß einem Standort innerhalb eines entsprechenden elektronischen Artikelüberwachungs-Abfragebereichs.

15. Verfahren nach Anspruch 11, ferner umfassend das Gruppieren und Einplanen der mindestens einen EAS-Vorrichtung (14) gemäß einer Ähnlichkeit der Funktion mit anderen Vorrichtungen.

## Revendications

1. Système pour la gestion de la consommation d'énergie d'au moins un dispositif de surveillance électronique d'articles (EAS) (14), le système comprenant :
un premier gestionnaire de dispositif (18) pour émettre au moins un programme d'économie d'énergie, le au moins un programme d'économie d'énergie définissant des heures d'activation et de désactivation de mode économie d'énergie pour le au moins un dispositif EAS (14) ; et
un second gestionnaire de dispositif (12) pour recevoir le au moins un programme d'économie d'énergie, le second gestionnaire de dispositif étant également en communication avec le au moins un dispositif EAS (14), le second gestionnaire de dispositif étant configuré pour :
émettre des ordres d'activer ou de désactiver le mode économie d'énergie vers le au moins un dispositif EAS (14) sur la base du au moins un programme d'économie d'énergie vers le au moins un dispositif EAS (14) ; et
recevoir des signaux d'état de mode économie d'énergie en provenance du au moins un dispositif EAS (14), lesdits signaux d'état de mode économie d'énergie indiquant l'état du mode économie d'énergie de l'au moins un dispositif EAS (14) ;
l'activation et la désactivation du mode économie d'énergie du au moins un dispositif EAS (14) ayant lieu à l'occurrence d'un événement déclencheur, des informations concernant l'état du au moins un dispositif EAS (14) ainsi que des informations concernant ledit événement déclencheur (12) étant émises vers le second gestionnaire de dispositif (12) ;
le premier ou le second gestionnaire de dispositif (12, 18) étant agencé pour modifier le au moins un programme d'économie d'énergie sur la base desdits signaux d'état de mode économie d'énergie et desdites informations d'évènement déclencheur émises.

2. Système selon la revendication 1, dans lequel le au moins un dispositif EAS (14) est groupé et programmé selon un emplacement à l'intérieur d'une zone d'interrogation de surveillance électronique d'articles correspondante.

3. Système selon la revendication 1, dans lequel le au moins un dispositif EAS (14) est groupé et programmé selon une similarité de fonction avec d'autres dispositifs.

4. Système selon la revendication 1, dans lequel le second gestionnaire de dispositif est situé à l'intérieur d'une zone d'interrogation de surveillance électronique d'articles.

5. Système selon la revendication 1, dans lequel l'évènement déclencheur est un moment spécifique d'un jour spécifique de la semaine.

6. - Système selon la revendication 1, dans lequel le au moins un dispositif EAS (14) est un dispositif de désactivation de produit et l'évènement déclencheur est une transaction en point de vente mettant en jeu le dispositif de désactivation ou le au moins un dispositif EAS (14) est un dispositif de détection de personnes et l'évènement déclencheur est basé sur un nombre de personnes passant dans les limites d'une proximité prédéterminée du dispositif de détection de personnes.

7. Système selon la revendication 1, dans lequel le second gestionnaire de dispositif émet les signaux d'état de mode économie d'énergie reçus en provenance du au moins un dispositif EAS (14) vers le premier gestionnaire de dispositif, et le premier gestionnaire de dispositif modifie le au moins un programme d'économie d'énergie sur la base des signaux d'état de mode économie d'énergie reçus.

8. Système selon la revendication 1, dans lequel le second gestionnaire de dispositif crée un profil pour le au moins un dispositif EAS (14) et modifie le au moins un programme d'économie d'énergie sur la base du profil pour le au moins un dispositif EAS (14).

9. Gestionnaire central de dispositif pour gérer la consommation d'énergie d'au moins un dispositif EAS (14), le gestionnaire central de dispositif (18) comprenant :
un module de programmation pour créer au moins un programme d'économie d'énergie, le au moins un programme d'économie d'énergie définissant des heures d'activation et de désactivation de mode économie d'énergie pour le au moins un dispositif EAS (14) ; et
un module de communication de programme pour envoyer le au moins un programme d'économie d'énergie à un gestionnaire local de dispositif (12), le mode de communication de programme recevant en provenance du gestionnaire local de dispositif (12) des signaux d'état de mode économie d'énergie indiquant l'état du mode économie d'énergie du au moins un dispositif EAS et des informations concernant au moins un événement déclencheur qui a déclenché l'activation et la désactivation du mode économie d'énergie du au moins un dispositif EAS (14),
le module de programmation modifiant le au moins un programme d'économie d'énergie sur la base des signaux d'état de mode économie d'énergie reçus et des informations reçues concernant le au moins un événement déclencheur.

10. Gestionnaire central de dispositif selon la revendication 9, le gestionnaire central de dispositif étant agencé pour recevoir en provenance du gestionnaire local de dispositif (12) un profil pour le au moins un dispositif EAS (14) et pour stocker et gérer ledit profil reçu.

11. Procédé pour gérer la consommation d'énergie d'au moins un dispositif EAS (14), le procédé comprenant :
créer à un premier gestionnaire de dispositif (18) et émettre vers un second gestionnaire de dispositif (12) au moins un programme d'économie d'énergie, le au moins un programme d'économie d'énergie définissant des heures d'activation et de désactivation de mode économie d'énergie pour le au moins un dispositif EAS (14) ;
émettre par le second gestionnaire de dispositif (12) des ordres d'activer ou de désactiver le mode économie d'énergie vers le au moins un dispositif EAS (14), les ordres d'activer ou de désactiver le mode économie d'énergie étant basés sur le au moins un programme d'économie d'énergie et donnant instruction à le au moins un dispositif EAS (14) soit d'activer soit de désactiver le mode économie d'énergie ;
recevoir par le second gestionnaire de dispositif (12) des informations d'état de mode économie d'énergie en provenance du au moins un dispositif EAS (14), les informations d'état de mode économie d'énergie indiquant l'état du mode économie d'énergie du au moins un dispositif EAS (14) ; ;
l'activation ou la désactivation du mode économie d'énergie du au moins un dispositif EAS (14) ayant lieu sur la base de l'occurrence d'au moins un évènement déclencheur ;
recevoir par le second gestionnaire de dispositif (12) des informations concernant ledit au moins un événement déclencheur ;
mettre à jour au premier ou au second gestionnaire de dispositif (12, 18) le au moins un programme d'économie d'énergie sur la base des informations d'état de mode économie d'énergie reçues et des informations concernant ledit au moins un évènement déclencheur.

12. Procédé selon la revendication 11, dans lequel l'évènement déclencheur est un moment spécifique d'un jour spécifique de la semaine.

13. Procédé selon la revendication 11, dans lequel le au moins un dispositif EAS (14) est un dispositif de désactivation de produit et l'évènement déclencheur est une transaction en point de vente mettant en jeu le dispositif de désactivation ou le au moins un dispositif EAS (14) est un dispositif de détection de personnes et l'évènement déclencheur est basé sur un nombre de personnes passant dans les limites d'une proximité prédéterminée du dispositif de détection.

14. Procédé selon la revendication 11, comprenant en outre grouper et programmer le au moins un dispositif EAS (14) selon un emplacement à l'intérieur d'une zone d'interrogation de surveillance électronique d'articles correspondante.

15. Procédé selon la revendication 11, comprenant en outre grouper et programmer le au moins un dispositif EAS (14) selon une similarité de fonction avec d'autres dispositifs.
